# EUROPÄISCHE PATENTSCHRIFT

(11) **EP 1 850 613 B1**
(45) Veröffentlichungstag und Bekanntmachung des Hinweises auf die Patenterteilung: **16.05.2012**
(21) Anmeldenummer: 06008846.5
(22) Anmeldetag: 27.04.2006
(51) Int. Cl.: H04W 4/02, H04W 64/00

(54) **Ermitteln von Ortsinformation in einem Kommunikationssystem**
Determining location information in a communication system
Déterminer une information de localisation dans un système de communication

(43) Veröffentlichungstag der Anmeldung: 31.10.2007
(73) Patentinhaber: Siemens Enterprise Communications GmbH & Co. KG, 81379 München (DE)
(72) Erfinder: Bozionek, Bruno, 33178 Borchen (DE); Klaus, Dieter, 33129 Delbrück (DE); Niemeier, Hubert, Dr., 33106 Paderborn (DE)
(74) Vertreter: Fritzsche, Thomas

(56) Entgegenhaltungen:
- EP-A- 1 146 699
- WO-A-2005/033828
- WO-A-2005/103624

## Beschreibung

Die Erfindung betrifft ein Verfahren zum rechnergestützten Betreiben eines Kommunikationssystems mit einem Kommunikationsnetzwerk, das eine Mehrzahl an Netzknoten aufweist, welche dazu ausgebildet sind, mit einer Anzahl an Endgeräten des Kommunikationssystems Daten auszutauschen. Die Erfindung betrifft ferner eine Verwendung einer Anzahl an Endgeräten in einem Kommunikationssystem mit einem Kommunikationsnetzwerk sowie ein Verfahren zum rechnergestützten Betreiben eines Netzknotens in einem Kommunikationsnetzwerk. Die Erfindung betrifft weiterhin ein Kommunikationssystem mit einem Kommunikationsnetzwerk.

Kommunikationsnetzwerke sind in einer Vielzahl an Ausprägungen bekannt. So kann ein Kommunikationsnetzwerk, das in einem Gebäude und gegebenenfalls über ein Gelände verteilt ist, ausschließlich durch einen privaten Betreiber betrieben werden und nur durch Endgeräte genutzt werden, die dem privaten Betreiber zuzuordnen oder durch diesen zugelassen sind. Ein solches Kommunikationsnetzwerk könnte beispielsweise ein firmenspezifisches Kommunikationsnetzwerk sein, das die Kommunikation in den Gebäuden der Firma sowie einem Gelände der Firma ermöglicht. Ein derartiges Kommunikationsnetzwerk wird häufig auch als Enterprise-Netzwerk bezeichnet.

In dem durch das Kommunikationsnetzwerk abgedeckten Bereich können eine Vielzahl an interessanten Orten, so genannten Points of Interest (PoI), festgelegt sein. PoIs sind im Zusammenhang mit Navigationssystemen und Routenplanern bekannt. PoIs sind Orte, die für den Nutzer einer Karte oder eines Navigationssystems von Interesse sein können, wie z.B. Restaurants, Bankautomaten oder Tankstellen. Im konkreten Fall des durch das Kommunikationsnetzwerk abgedeckten Bereichs sind Pols beispielsweise Konferenzräume, Arbeitsplätze, Bibliotheken, Fahrstuhlzugänge usw. Die PoIs können in einer Karte als Symbole dargestellt oder eingeblendet werden. Von Navigationssystemen ist es z.B. bekannt, dass visuell und akustisch auf PoIs hingewiesen wird, sobald man sich diesen nähert. Für PoIs können weiterhin Zusatzinformationen, wie z.B. Öffnungszeiten, Telefonnummern und dergleichen, hinterlegt werden.

Zur Kommunikation mit den Netzknoten des Kommunikationsnetzwerks eingerichtete Endgeräte verfügen über eine drahtlose Kommunikations-Schnittstelle, wie z.B. WLAN (Wireless Area Network), DECT (Digital Enhanced Cordless Telecommunications), Bluetooth, GSM (Global System for Mobile Communications) usw., mit welcher ein Datenaustausch mit den Netzknoten des Kommunikationsnetzwerks möglich ist.

Aufgrund der drahtlosen Kommunikations-Technologie ist das Endgerät oder eine mit dem Endgerät kommunizierende Infrastruktur, z.B. das Kommunikationsnetzwerk, in der Lage, die gegenwärtige Position zu bestimmen. Die Position kann in ein, beliebig definiertes, Koordinatensystem eingeordnet werden. So ist es nun möglich, jedem PoI eine Position zuzuordnen und die physikalischen Koordinaten in dem definierten Koordinatensystem in einer durch das Kommunikationsnetzwerk zugänglichen Datenbank zu hinterlegen.

Aus der Druckschrift EP 1146699 A2 ist ein Verfahren zum Sammeln von Informationen über mittels Kurzstreckenfunk, wie z.B. Bluetooth, erreichbaren Service-Portalen bekannt. Hierbei werden immer dann, wenn ein mobiles Endgerät in Funkreichweite eines derartigen Portals gelangt, Informationen über die vom Portal bereitgestellten Dienste durch das mobile Endgerät abgerufen und von diesem - gegebenenfalls zusammen mit einer Ortsinformation - an eine Datenbank übertragen. Dort werden die Informationen über die verschiedenen Portale gesammelt und bilden mit der jeweils zugeordneten Ortsinformation eine abfragbare Datenbasis über die räumliche Verteilung der verfügbaren Portale.

Die Bestimmung der gegenwärtigen örtlichen Position kann durch bekannte Verfahren der Triangulation, z.B. durch eine Mehrzahl an Netzknoten des Kommunikationsnetzwerks, oder die Bestimmung von Längen- und Breitengraden mittels GPS oder Galileo erfolgen. Bekannt ist auch, eine Position anhand von Funkfeldbedingungen, in dem die Feldstärke zu mehreren der auf drahtloser Basis kommunizierenden Netzknoten des Kommunikationsnetzwerks ermittelt wird, zu bestimmen.

Durch eine kontinuierliche Ermittlung der gegenwärtigen Position des Endgeräts, z.B. in Form von Koordinaten, und einen Austausch der Koordinaten mit dem Kommunikationsnetzwerk ist es möglich, die Annäherung an einen PoI zu detektieren. Zur Ermöglichung dieser Funktionalität ist es deshalb notwendig, in dem durch das Kommunikationsnetzwerk abgedeckten lokalen Bereich Messungen für jeden PoI vorzunehmen, die gemessenen physikalischen Ortskoordinaten dem definierten Koordinatensystem zuzuweisen und die hierbei ermittelten Daten in der Datenbank zu hinterlegen.

Nachteilig hieran ist der große Aufwand der durchzuführenden Messungen für jeden PoI, insbesondere dann, wenn das Kommunikationsnetzwerk eine große räumliche Erstreckung aufweist. Weiterhin problematisch ist die Tatsache, dass Änderungen der räumlichen Gegebenheiten zu geänderten Messwerten, betreffend die gegenwärtige Position des Endgeräts an einem PoI, führen können. Solche Änderungen der räumlichen Gegebenheiten können beispielsweise durch umgestellte Möbel innerhalb eines Gebäudes, Versetzen von Wänden, insbesondere das Hinzufügen von Wänden, in einem Gebäude führen.

Es ist Aufgabe der vorliegenden Erfindung ein Verfahren zum rechnergestützten Betreiben eines Kommunikationssystems mit einem Kommunikationsnetzwerk und mit einer Anzahl an Endgeräten sowie Verfahren zum Betreiben des Kommunikationsnetzwerks und des Endgeräts anzugeben, welche die im Stand der Technik beschriebenen Nachteile nicht aufweisen. Es ist ferner Aufgabe der vorliegenden Erfindung, ein Kommunikationsnetzwerk und ein Endgerät anzugeben, welche zur Durchführung der erfindungsgemäßen Verfahren ausgebildet sind.

Diese Aufgaben werden mit den Merkmalen der unabhängigen Patentansprüche gelöst. Vorteilhafte Ausführungsformen ergeben sich jeweils aus den abhängigen Patentansprüchen.

Ein erfindungsgemäßes Verfahren zum rechnergestützten Betreiben eines Kommunikationssystems mit einem Kommunikationsnetzwerk, das eine Mehrzahl an Netzknoten aufweist, welche dazu ausgebildet sind, mit einer Anzahl an Endgeräten des Kommunikationssystems Daten auszutauschen, umfasst die folgenden Schritte: Durch die Endgeräte wird eine erste Ortsvariable zu oder an einem bestimmten Punkt ermittelt, wobei die erste Ortsvariable eine semantische Beschreibung zu dem bestimmten Punkt umfasst. Durch die Endgeräte wird eine zweite Ortsvariable zu oder an dem bestimmten Punkt ermittelt, wobei die zweite Ortsvariable physikalische Ortsinformationen zu dem bestimmten Punkt umfasst. Die erste und die zweite Ortsvariable, die von einem der Endgeräte ermittelt werden, stellen zusammen eine Ortsinformation dar, wobei die Ortsinformation an einen Netzknoten des Kommunikationsnetzwerks zur weiteren Verarbeitung übertragen wird.

Das erfindungsgemäße Verfahren macht es entbehrlich, zu den als bestimmten Punkten bezeichneten Points of Interest vorherige Messungen hinsichtlich der physikalischen Koordinaten durchzuführen. Vielmehr werden die zu einem bestimmten Punkt notwendigen Informationen, das heißt die physikalischen Koordinaten, durch die Endgeräte selbst bestimmt. Um eine Zuordnung der physikalischen Koordinaten zu dem bestimmten Punkt ermöglichen zu können, sieht die Erfindung vor, neben den physikalischen Ortsinformationen zusätzlich eine semantische Beschreibung zu dem bestimmten Punkt in Form der ersten Ortsvariable zu ermitteln. Anhand der eine Ortsinformation darstellenden ersten und zweiten Ortsvariable kann bei Vorliegen einer Vielzahl von Ortsinformationen von einer Vielzahl an Endgeräten bzw. Messungen auf einfache Weise mit hoher Zuverlässigkeit der physikalische Ort jedes bestimmten Punkts ermittelt werden.

Insbesondere wird es hierdurch möglich, sich ergebende Änderungen während des Betriebs des Kommunikationssystems festzustellen, indem beispielsweise zu einem bestimmten Punkt, dem als erste Ortsvariable eine bestimmte semantische Beschreibung zugeordnet ist, zweite Ortsvariablen mit anderen physikalischen Ortsinformationen ermittelt werden. Das erfindungsgemäße Verfahren stellt damit einen Selbstlern-Mechanismus bereit, so dass administrative Messungen durch einen Administrator des Kommunikationsnetzwerkes entbehrlich sind.

In einer Ausführungsform der Erfindung wertet der Netzknoten die von der Anzahl an Endgeräten empfangenen Ortsinformationen aus und bestimmt dabei zu jeder ersten Ortsvariablen eine zugeordnete dritte Ortsvariable aus den zweiten Ortsvariablen, wobei die dritte Ortsvariable physikalische Ortsinformationen zu dem durch die erste Ortsvariable charakterisierten bestimmten Punkt umfasst. Dabei wird bevorzugt zur Bestimmung der dritten Ortsvariablen eine Vielzahl an zweiten Ortsvariablen herangezogen und, insbesondere statistisch, ausgewertet. Mit anderen Worten werden hierbei zu einer semantischen Beschreibung zu jedem bestimmten Punkt die physikalischen Ortsinformationen, z.B. in Form von Koordinaten in einem beliebig definierten Koordinatensystem, ermittelt. Die physikalischen Ortsinformationen werden hierbei aus der Auswertung einer Vielzahl an zu dem bestimmten Punkt übermittelten physikalischen Ortsinformationen ermittelt. Damit kann mit großer Zuverlässigkeit zu jedem bestimmten Punkt eine, zum gegebenen Zeitpunkt tatsächliche oder hoch wahrscheinliche physikalische Ortsinformation ermittelt werden, welche in der dritten Ortsvariable hinterlegt wird. Die dritte Ortsvariable kann dabei inhaltlich mit der zweiten Ortsvariablen übereinstimmen. Die dritte Ortsvariable zu einem bestimmten kann jedoch auch zu der oder den zweiten Ortsvariablen zu dem bestimmten abweichen, z.B. wenn der bestimmte Punkt eine tatsächliche Änderung des physikalischen Ortes erfahren hat.

Gemäß einer weiteren Ausbildung des erfindungsgemäßen Verfahrens wird durch den Netzknoten für jeden bestimmten Punkt als Ortsinformation die erste Ortsvariable und die dritte Ortsvariable gespeichert. Der Netzknoten kann beispielsweise ein zentraler Rechner des Kommunikationsnetzwerks sein, der mit einem Speicher zur Aufnahme einer Datenbank in Verbindung steht. Das Speichern der ersten und der dritten Ortsvariable zu einem bestimmten Punkt ist ausreichend, da die dritte Ortsvariable die aus einer permanenten Auswertung einer Vielzahl von zweiten Ortsvariablen zu dem bestimmten Punkt ermittelten physikalischen Ortsinformationen umfasst. Sofern gegebenenfalls Veränderungen der physikalischen Ortsinformationen zu dem bestimmten Punkt nachvollzogen werden sollen, kann auch angedacht sein, zusätzlich die zweite Ortsvariable zu dem bestimmten Punkt zu speichern.

Die dritte Ortsvariable wird in einer weiteren Ausführungsform den Netzknoten des Kommunikationsnetzwerks und/oder den Endgeräten zur weiteren.Verarbeitung, insbesondere zur Erkennung des bestimmten Punkts, zur Verfügung gestellt. Damit ist es möglich, den Endgeräten zu jedem bestimmten Punkt die tatsächlich gültigen physikalischen Ortsinformationen in Form der dritten Ortsvariable, z.B. zum Auffinden der bestimmten Punkte, zur Verfügung zu stellen. Hiermit ist eine höhere Genauigkeit beim Betreiben des Kommunikationssystems sichergestellt.

Die Ermittlung der ersten Ortsvariablen wird durch die Überwachung einer Aktivierung eines Eingabemittels des Endgeräts durchgeführt. Die semantische Information, die als erste Ortsvariable weiter verarbeitet wird, wird durch den Nutzer des Endgerätes eingegeben. Vorzugsweise wird dem Nutzer hierzu eine Auswahlliste angeboten, um Unterschiede in der semantischen Beschreibung eines bestimmten Punktes zu vermeiden.

Die Ermittlung der zweiten Ortsvariable, das heißt der physikalischen Ortsinformationen zu oder an dem bestimmten Punkt, wird durch eines oder mehrere der folgenden Verfahren durch das Endgerät durchgeführt: Es kommen Triangulationsverfahren in Betracht, die unter Zuhilfenahme der Netzknoten des Kommunikationsnetzwerkes durchgeführt werden können. Triangulationsverfahren können auch in Verbindung mit einem GPS (Global Positioning System) oder einem Galileo-System erfolgen. Eine weitere Möglichkeit, die Daten der zweiten Ortsvariable an dem bestimmten Punkt zu bestimmen, besteht darin, die Funkfeldbedingungen zu ermitteln, indem die Feldstärken zumindest einiger der auf drahtloser Basis kommunizierenden Netzknoten des Kommunikationsnetzwerks ermittelt werden. Bei dieser Variante wird der bestimmte Punkt durch eine Mehrzahl an Feldstärken verschiedener Netzknoten des Kommunikationsnetzwerks charakterisiert.

Bei einer Verwendung einer Anzahl an Endgeräten in einem Kommunikationssystem mit einem Kommunikationsnetzwerk, das eine Mehrzahl an Netzknoten aufweist, welche dazu ausgebildet sind, mit dem Endgerät Daten auszutauschen, werden die folgenden Schritte durchgeführt: Durch die Endgeräte wird eine erste Ortsvariable zu oder an einem bestimmten Punkt ermittelt, wobei die erste Ortsvariable eine semantische Beschreibung zu dem bestimmten Punkt umfasst. Durch die Endgeräte wird eine zweite Ortsvariable zu oder an dem bestimmten Punkt ermittelt, wobei die zweite Ortsvariable physikalische Ortsinformationen zu dem bestimmten Punkt umfasst. Die erste und die zweite Ortsvariable, die von einem der Endgeräte ermittelt werden, stellen zusammen eine Ortsinformation dar, wobei die Ortsinformation an einen Netzknoten des Kommunikationsnetzwerks übertragen wird.

In einer Weiterbildung empfängt das Endgerät eine dritte Ortsvariable, die dem bestimmten Punkt zugeordnet ist und tauscht die in der Ortsinformation enthaltene zweite Ortsvariable durch die dritte Ortsvariable aus, wobei die dritte Ortsvariable physikalische Ortsinformationen zu dem durch die erste Ortsvariable charakterisierten bestimmten Punkt umfasst und durch das Kommunikationssystem ermittelt ist.

Bei einem erfindungsgemäßen Verfahren zum rechnergestützten Betreiben eines Netzknotens in einem Kommunikationsnetzwerk, das eine Mehrzahl an Netzknoten aufweist, welche dazu ausgebildet sind, mit einer Anzahl an Endgeräten eines kommunikationssystems Daten auszutauschen, werden folgende Schritte durchgeführt: Durch einen Netzknoten wird eine Ortsinformation, die eine erste und eine zweite Ortsvariable zu einem bestimmten Punkt umfasst, von der Anzahl an Endgeräten empfangen, wobei die erste Ortsvariable eine semantische Beschreibung zu dem bestimmten Punkt umfasst und wobei die zweite Ortsvariable physikalische Ortsinformationen zu dem bestimmten Punkt umfasst. Der Netzknoten wertet die von der Anzahl an Endgeräten empfangenen Ortsinformationen aus und bestimmt dabei zu jeder ersten Ortsvariablen eine zugeordnete dritte Ortsvariable aus den zweiten Ortsvariablen, wobei die dritte Ortsvariable physikalische Ortsinformationen zu dem durch die erste Ortsvariable charakterisierten bestimmten Punkt umfasst.

In einer Weiterbildung wird zur Bestimmung der dritten Ortsvariablen eine Vielzahl an zweiten Ortsvariablen herangezogen und, insbesondere statistisch, ausgewertet.

In einer Weiterbildung wird durch den Netzknoten für jeden bestimmten Punkt als Ortsinformation die erste Ortsvariable und die dritte Ortsvariable gespeichert.

In einer Weiterbildung wird die dritte Ortsvariable den Netzknoten des Kommunikationsnetzwerks und/oder den Endgeräten zur weiteren Verarbeitung, insbesondere zur Erkennung des bestimmten Punkts, zur Verfügung gestellt.

Mit diesen Verfahren sind die gleichen Vorteile verbunden, wie sie in Verbindung mit dem erfindungsgemäßen Kommunikationssystem erläutert wurden.

Die Erfindung umfasst ferner ein Kommunikationssystem mit einem Kommunikationsnetzwerk, das eine Mehrzahl an Netzknoten aufweist, welche dazu ausgebildet sind, mit einer Anzahl an Endgeräten eines Kommunikationssystems Daten auszutauschen und das Mittel zur Durchführung des oben beschriebenen Verfahrens aufweist. Insbesondere ist das Kommunikationsnetzwerk als Enterprise-Netzwerk ausgebildet.

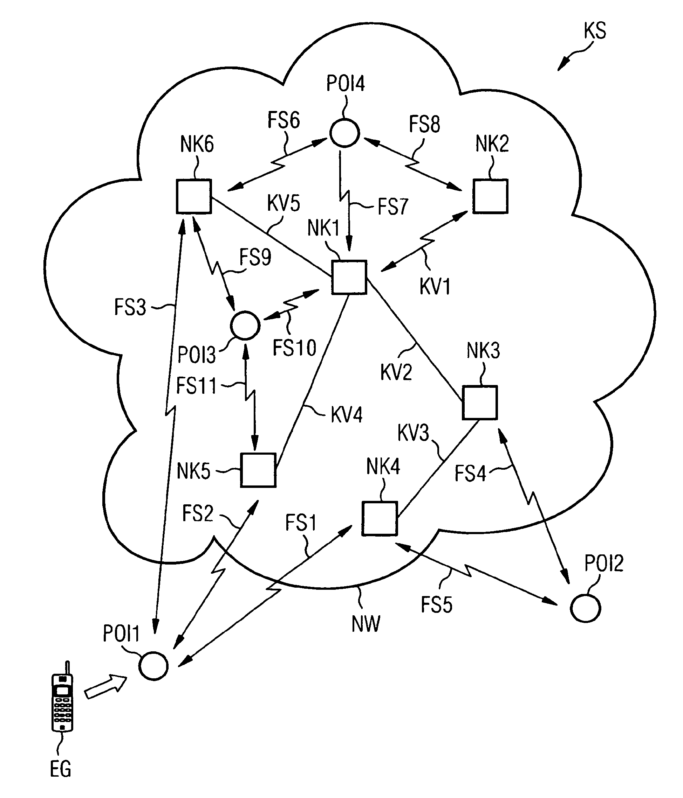

Die Erfindung wird nachfolgend anhand eines Ausführungsbeispiels in der Figur näher erläutert.

Die einzige Figur zeigt ein erfindungsgemäßes Kommunikationssystem KS, das ein Kommunikationsnetzwerk NW mit einer Vielzahl an Netzknoten NK1, NK2, NK3, NK4, NK5, NK6 umfasst. Die Netzknoten NK1, NK2, NK3, NK4, NK5, NK6 sind über Kommunikationsverbindungen KV1, KV2, KV3, KV4, KV5 zum Datenaustausch miteinander verbunden, wobei die Kommunikationsverbindung KV1 beispielhaft drahtlos und die übrigen Kommunikationsverbindungen KV2, KV3, KV4, KV5 beispielhaft drahtgebunden ausgebildet sind. Die Netzknoten NK1, NK2, NK3, NK4, NK5, NK6 können in beliebiger Weise über Kommunikationsverbindungen miteinander verbunden sein. Im Weiteren verfügen die Netzknoten NK1, NK2, NK3, NK4, NK5, NK6 über eine kontaktlos ausgebildete Kommunikationsschnittstelle zur Kommunikation mit Endgeräten EG, wobei in der Figur beispielhaft lediglich ein einziges Endgerät EG dargestellt ist.

Das Kommunikationsnetzwerk NW stellt beispielsweise ein so genanntes Enterprise-Netzwerk dar, welches nicht zur öffentlichen Kommunikation bereit steht, sondern vielmehr in der Einflusssphäre z.B. einer Firma ist. Das Kommunikationsnetzwerk NW kann sich über ein oder mehrere Gebäude und die entsprechenden Liegenschaften erstrecken. Innerhalb der örtlichen Ausdehnung des Kommunikationsnetzwerks sind so genannte Points of Interest PoI1, PoI2, PoI3 und PoI4 definiert. Diese als Points of Interest bezeichneten bestimmten Punkte können beispielsweise einen bestimmten Arbeitsplatz, einen Konferenzraum, einen Eingang, einen Fahrstuhlzugang usw. darstellen Jeder der bestimmten Punkte PoI1, PoI2, PoI3 und PoI4 ist durch physikalische Ortsinformationen, z.B. Koordinaten in einem selbstdefinierten Koordinatensystem, geografische Längen- und Breitengrade oder dergleichen, charakterisiert. Daneben kann jedem der bestimmten Punkte PoI1, PoI2, PoI3 und PoI4 eine semantische Beschreibung ("Arbeitsplatz", "Konferenzraum 1", "Eingang 4", "Fahrstuhlzugang 8") zugewiesen werden.

Die Erfindung ermöglicht nun ein automatisches Ermitteln und Bereitstellen von Ortsinformationen in dem Kommunikationsnetzwerk NW, wobei das Verfahren eine selbstlernende Beschreibung der bestimmten Punkte gestattet. Befindet sich das Endgerät beispielsweise an dem bestimmten Punkt PoI1, so wird die durch den Benutzer des Endgeräts eingegebene semantische Beschreibung des bestimmten Punkts PoI1 durch das Endgerät erfasst. Die semantische Beschreibung kann durch eine freie Eingabe der Beschreibung durch den Benutzer erfolgen. Bevorzugt ist die Zurverfügungstellung einer Liste mit beschreibenden Inhalten, so dass der Benutzer des Endgeräts EG eine, den bestimmten Punkt PoI1 charakterisierende semantische Beschreibung auswählen kann.

Gleichzeitig werden durch das Endgerät EG physikalische Ortsinformationen, z.B. Längen- und Breitengrade oder Funkfeldbedingungen zu mehreren der Netzknoten NK1, NK2, NK3, NK4, NK5, NK6 ermittelt. Im Ausführungsbeispiel bestehen an dem bestimmten Punkt PoI1 Funkverbindungen zu den Netzknoten NK4, NK5 und NK6, so dass an dem bestimmten Punkt PoI1 jeweilige Feldstärken FS1, FS2, FS3 vorliegen. Die semantische Beschreibung und die physikalischen Ortsinformationen bilden zusammen eine Ortsinformation, die von dem Endgerät EG an einen der Netzknoten NK4, NK5, NK6 des Kommunikationsnetzwerks NK übertragen wird.

Im Laufe des Betriebs des erfindungsgemäßen Kommunikationsnetzwerks NW werden durch eine Vielzahl an Endgeräten EG zu jedem bestimmten Punkt PoI1, PoI2, PoI3, PoI4 derartige Ortsinformationen an das Kommunikationsnetzwerk NW übermittelt.

Ein ausgewählter Rechner des Kommunikationsnetzwerks, z.B. ein Server, speichert die ihm zugeführten Ortsinformationen zu sämtlichen bestimmten Punkten PoI1, PoI2, Po13 und PoI4. Eine Auswertung erfolgt dahingehend, dass die zu einem bestimmten Punkt (das heißt einer bestimmten semantischen Beschreibung) sämtliche physikalische Ortsinformationen statistisch ausgewertet werden. Hieraus ergibt sich eine weitere Ortsvariable, deren physikalische Ortsinformationen der semantischen Beschreibung des bestimmten Punkts zugeordnet werden.

Ergeben sich, z.B. aufgrund von baulichen Veränderungen in einem Gebäude, Abweichungen in den Feldstärken an einem bestimmten Punkt, so registriert dies das Kommunikationsnetzwerk aufgrund veränderter physikalischer Ortsinformationen, die diesem bestimmten Punkt zugewiesen sind. Im Rahmen der Auswertung erkennt das Kommunikationsnetzwerk bzw. der die Auswertung vornehmende Netzknoten, dass sich die physikalischen Ortsinformationen zu dem bestimmten Punkt geändert haben. Diese Änderung wird durch das Kommunikationsnetzwerk NW bzw. den auswertenden Netzknoten registriert. Die tatsächlichen, physikalischen Ortsinformationen können im Weiteren den Netzknoten des Kommunikationsnetzwerks bzw. darauf laufenden Applikationen und/oder den mit dem Netzknoten in Datenaustausch in den Endgeräten EG zur weiteren Verarbeitung zur Verfügung gestellt werden. Die Endgeräte EG können diese Informationen z.B. zum Navigieren innerhalb des Enterprise-Netzwerks heranziehen.

Hierdurch entsteht ein kontinuierlicher Verbesserungsprozess, bei dem die Ortsinformation zu einem bestimmten Punkt kontinuierlich aktualisiert und verbessert werden. Der selbstlernende Effekt wird dadurch erreicht, dass bei Erhalt der von den Endgeräten ermittelten aktuellen Ortsinformationen eine Abweichung zum Ist-Wert durch den die Auswertung vornehmenden Netzknoten des Kommunikationsnetzwerks erkannt wird, wobei aus einer entsprechenden Häufigkeit dieser auftretenden Veränderungen abgeleitet wird, dass sich z.B. die Funkfeldbedingungen an dem bestimmten Punkt geändert haben. Damit wird in beschriebener Weise die Ortsinformation zu dem bestimmten Punkt in einer Datenbank des Kommunikationsnetzwerks aktualisiert.

Bezugszeichenliste
- KS: Kommunikationssystem
- NW: Kommunikationsnetzwerk
- EG: Endgerät
- NK1,...,NK6: Netzknoten
- KV1,...,KV5: Kommunikationsverbindung
- PoI1, ..., PoI4: bestimmter Punkt (Point of Interest)
- FS1,..., FS11: Feldstärke

## Patentansprüche

1. Verfahren zum rechnergestützten Betreiben eines Kommunikationssystems (KS) mit einem Kommunikationsnetzwerk (NW), das eine Mehrzahl an Netzknoten (NK1, NK2, NK3, NK4, NK5, NK6) aufweist, welche dazu ausgebildet sind, mit einer Anzahl an Endgeräten (EG) des Kommunikationssystems (KS) Daten auszutauschen, bei dem:
- durch die Endgeräte (EG) eine erste Ortsvariable zu oder an einem bestimmten Punkt (PoI1, PoI2, PoI3, PoI4) ermittelt wird, wobei die erste Ortsvariable eine semantische Beschreibung zu dem bestimmten Punkt umfasst,
- durch die Endgeräte (EG) eine zweite Ortsvariable zu oder an dem bestimmten Punkt (PoI1, PoI2, PoI3, PoI4) ermittelt wird, wobei die zweite Ortsvariable physikalische Ortsinformationen zu dem bestimmten Punkt umfasst, und
- die erste und die zweite Ortsvariable, die von einem der Endgeräte ermittelt werden, zusammen eine Ortsinformation darstellen und die Ortsinformation an einen Netzknoten (NK1, NK2, NK3, NK4, NK5, NK6) des Kommunikationsnetzwerks (NW) zur weiteren Verarbeitung übertragen wird,
**dadurch gekennzeichnet,**
- **dass** der Netzknoten (NK1, NK2, NK3, NK4, NK5, NK6) die von der Anzahl an Endgeräten empfangenen Ortsinformationen auswertet und dabei zu jeder ersten Ortsvariablen eine zugeordnete dritte Ortsvariable aus den zweiten Ortsvariablen bestimmt, wobei die dritte Ortsvariable physikalische Ortsinformationen zu dem durch die erste Ortsvariable charakterisierten bestimmten Punkt umfasst, und
- **dass** zur Bestimmung der dritten Ortsvariablen eine Vielzahl an zweiten Ortsvariablen herangezogen und ausgewertet wird.

2. Verfahren nach Anspruch 1,
**dadurch gekennzeichnet, dass**
durch den Netzknoten (NK1, NK2, NK3, NK4, NK5, NK6) für jeden bestimmten Punkt (PoI1, PoI2, PoI3, PoI4) als Ortsinformation die erste Ortsvariable und die dritte Ortsvariable gespeichert wird.

3. Verfahren nach einem der vorherigen Ansprüche,
**dadurch gekennzeichnet, dass**
die dritte Ortsvariable den Netzknoten (NK1, NK2, NK3, NK4, NK5, NK6) des Kommunikationsnetzwerks (NW) und/oder den Endgeräten (EG) zur weiteren Verarbeitung zur Verfügung gestellt wird.

4. Verfahren nach einem der vorherigen Ansprüche,
**dadurch gekennzeichnet, dass**
die Ermittlung der ersten Ortsvariable durch die Überwachung einer Aktivierung eines Eingabemittels des Endgeräts (EG) durchgeführt wird.

5. Verfahren nach einem der vorherigen Ansprüche,
**dadurch gekennzeichnet, dass**
die Ermittlung der zweiten Ortsvariablen zu oder an dem bestimmten Punkt (PoI1, PoI2, PoI3, PoI4) durch eines oder mehrere der folgenden Verfahren durch das Endgerät (EG) durchgeführt wird:
- Triangulationsverfahren,
- Bestimmung der Funkfeldbedingungen (FS1, ..., FS11), indem die Feldstärken zumindest einiger der auf drahtloser Basis kommunizierenden Netzknoten (NK1, NK2, NK3, NK4, NK5, NK6) des Kommunikationsnetzwerks (NW) ermittelt werden.

6. Verwendung einer Anzahl an Endgeräten in einem Kommunikationssystem (KS) mit einem Kommunikationsnetzwerk (NW), das eine Mehrzahl an Netzknoten (NK1, NK2, NK3, NK4, NK5, NK6) aufweist, welche dazu ausgebildet sind, mit der Anzahl an Endgeräten (EG) Daten auszutauschen, wobei das Kommunikationssystem (KS) gemäß dem Verfahren nach einem der Ansprüche 1 bis 5 betrieben wird, wobei bei der Verwendung:
- durch die Endgeräte (EG) eine erste Ortsvariable zu oder an einem bestimmten Punkt (PoI1, PoI2, PoI3, PoI4) ermittelt wird, wobei die erste Ortsvariable eine semantische Beschreibung zu dem bestimmten Punkt umfasst,
- durch die Endgeräte (EG) eine zweite Ortsvariable zu oder an dem bestimmten Punkt (PoI1, PoI2, PoI3, PoI4) ermittelt wird, wobei die zweite Ortsvariable physikalische Ortsinformationen zu dem bestimmten Punkt umfasst, und
- die erste und die zweite Ortsvariable, die von einem der Endgeräte ermittelt werden, zusammen eine Ortsinformation darstellen und die Ortsinformation an einen Netzknoten des Kommunikationsnetzwerks übertragen wird,
- der Netzknoten (NK1, NK2, NK3, NK4, NK5, NK6) die von der Anzahl von Endgeräten empfangenen Ortsinformationen auswertet und dabei zu jeder ersten Ortsvariablen eine zugeordnete dritte Ortsvariable aus den zweiten Ortsvariablen bestimmt, wobei die dritte Ortsvariable physikalische Ortsinformationen zu dem durch die erste Ortsvariable charakterisierten bestimmten Punkt umfasst, und
- zur Bestimmung der dritten Ortsvariablen eine Vielzahl an zweiten Ortsvariablen herangezogen und ausgewertet wird.

7. Verwendung einer Anzahl an Endgeräten nach Anspruch 6,
**dadurch gekennzeichnet, dass**
das Endgerät (EG) eine dritte Ortsvariable, die dem bestimmten Punkt (PoI1, PoI2, PoI3, PoI4) zugeordnet ist, empfängt und die in der Ortsinformation enthaltene zweite Ortsvariable durch die dritte Ortsvariable austauscht, wobei die dritte Ortsvariable physikalische Ortsinformationen zu dem durch die erste Ortsvariable charakterisierten bestimmten Punkt (PoI1, PoI2, PoI3, PoI4) umfasst und durch das Kommunikationssystem (KS) ermittelt ist.

8. Verfahren zum rechnergestützten Betreiben eines Netzknotens in einem Kommunikationsnetzwerk (NW), das eine Mehrzahl an Netzknoten (NK1, NK2, NK3, NK4, NK5, NK6) aufweist, welche dazu ausgebildet sind, mit einer Anzahl an Endgeräten (EG) eines Kommunikationssystems (KS) Daten auszutauschen, bei dem:
- durch den Netzknoten (NK1, NK2, NK3, NK4, NK5, NK6) eine Ortsinformation, die eine erste und eine zweite Ortsvariable zu einem bestimmten Punkt umfasst, von der Anzahl an Endgeräten (EG) empfangen wird, wobei die erste Ortsvariable eine semantische Beschreibung zu dem bestimmten Punkt umfasst, und wobei die zweite Ortsvariable physikalische Ortsinformationen zu dem bestimmten Punkt (PoI1, PoI2, PoI3, PoI4) umfasst,
**dadurch gekennzeichnet,**
- **dass** der Netzknoten (NK1, NK2, NK3, NK4, NK5, NK6) die von der Anzahl an Endgeräten (EG) empfangenen Ortsinformationen auswertet und dabei zu jeder ersten Ortsvariablen eine zugeordnete dritte Ortsvariable aus den zweiten Ortsvariablen bestimmt, wobei die dritte Ortsvariable physikalische Ortsinformationen zu dem durch die erste Ortsvariable charakterisierten bestimmten Punkt (PoI1, PoI2, PoI3, PoI4) umfasst, und
- zur Bestimmung der dritten Ortsvariablen eine Vielzahl an zweiten Ortsvariablen herangezogen und ausgewertet wird.

9. Verfahren nach Anspruch 8,
**dadurch gekennzeichnet, dass**
durch den Netzknoten (NK1, NK2, NK3, NK4, NK5, NK6) für jeden bestimmten Punkt (PoI1, PoI2, PoI3, PoI4) als Ortsinformation die erste Ortsvariable und die dritte Ortsvariable gespeichert wird.

10. Verfahren nach Anspruch 8 oder 9,
**dadurch gekennzeichnet, dass**
die dritte Ortsvariable den Netzknoten (NK1, NK2, NK3, NK4, NK5, NK6) des Kommunikationsnetzwerks (NW) und/oder den Endgeräten (EG) zur weiteren Verarbeitung zur Verfügung gestellt wird.

11. Kommunikationssystem (KS) mit einem Kommunikationsnetzwerk (NW), das eine Mehrzahl an Netzknoten (NK1, NK2, NK3, NK4, NK5, NK6) aufweist, welche dazu ausgebildet sind, mit einer Anzahl an Endgeräten des Kommunikationssystems (KS) Daten auszutauschen,
**dadurch gekennzeichnet, dass**
dieses Mittel zur Durchführung des Verfahrens nach einem der Ansprüche 1 bis 5 aufweist.

12. Kommunikationssystem (KS) nach Anspruch 11,
**dadurch gekennzeichnet, dass**
dieses ein Enterprise-Netzwerk ist.

## Claims

1. A method for the computer aided operation of a communication system (KS) with a communication network (NW) which exhibits a plurality of network nodes (NK1, NK2, NK3, NK4, NK5, NK6) which are configured to exchange data with a number of terminals (EG) of the communication system (KS), in which:
- the terminals (EG) determine a first position variable relating to or at a specific point (Pol1, Pol2, Pol3, Pol4), with the first position variable comprising a semantic description relating to that specific point,
- the terminals (EG) determine a second position variable relating to or at the specific point (Pol1, Pol2, Pol3, Pol4), with the second position variable comprising physical location information relating to that specific point, and
- the first and the second position variable which are determined by one of the terminals together represent location information with the location information being transmitted to a network node (NK1, NK2, NK3, NK4, NK5, NK6) in the communication network (NW) for further processing, wherein
- the network node (NK1, NK2, NK3, NK4, NK5, NK6) evaluates the location information received from the number of terminals and for every first position variable determines an associated third position variable from the second position variable, the third position variable comprising physical location information about the specific point **characterised by** the first position variable, and
- a large number of second position variables are used and evaluated for determining the third position variable.

2. A method according to claim 1 wherein the network node (NK1, NK2, NK3, NK4, NK5, NK6) stores the first position variable and the third position variable for every specific point (Pol1, Pol2, Pol3, Pol4) as location information.

3. A method according to any one of the preceding claims wherein the third position variable is made available to the network nodes (NK1, NK2, NK3, NK4, NK5, NK6) of the communication network (NW) and/or to the terminals (EG) for further processing.

4. A method according to any one of the preceding claims wherein the determining of the first position variable is carried out by the monitoring of an activation of an input means of the terminal (EG).

5. A method according to any one of the preceding claims wherein the determining of the second position variable relating to or at a specific point (Pol1, Pol2, Pol3, Pol4) is carried out by the terminal (EG) by one or more of the following methods:
- Triangulation method,
- Determining the radio field conditions (FS1,...,FS11) by determining the field strengths of at least some of the network nodes (NK1, NK2, NK3, NK4, NK5, NK6) of the communication network (NW) which communicate on a wireless basis.

6. The use of a number of terminals in a communication system (KS) with a communication network (NW) which exhibits a plurality of network nodes (NK1, NK2, NK3, NK4, NK5, NK6) which are configured to exchange data with the number of terminals (EG), the communication system (KS) being operated according to the method according to any one of claims 1 to 5, whereby during said use:
- the terminals (EG) determine a first position variable relating to or at a specific point (Pol1, Pol2, Pol3, Pol4), with the first position variable comprising a semantic description relating to that specific point,
- the terminals (EG) determine a second position variable relating to or at the specific point (Pol1, Pol2, Pol3, Pol4), with the second position variable comprising physical location information relating to that specific point, and
- the first and the second position variable which are determined by one of the terminals together represent location information and the location information is transmitted to a network node of the communication network,
- the network node (NK1, NK2, NK3, NK4, NK5, NK6) evaluates the location information received from the number of terminals and for every first position variable determines an associated third position variable from the second position variable, the third position variable comprising physical location information about the specific point **characterised by** the first position variable, and
- a large number of second position variables are used and evaluated for determining the third position variable.

7. The use of a number of terminals according to claim 6 wherein the terminal (EG) receives a third position variable that is associated with the specific point (Pol1, Pol2, Pol3, Pol4) and exchanges the second position variable contained in the location information with the third position variable, the third position variable comprising physical location information about the specific point (Pol1, Pol2, Pol3, Pol4) **characterised by** the first position variable and being determined by the communication system (KS).

8. A method for the computer aided operation of a network node in a communication network (NW) which exhibits a plurality of network nodes (NK1, NK2, NK3, NK4, NK5, NK6) which are configured to exchange data with a number of terminals (EG) of a communication system (KS), in which:
- the network node (NK1, NK2, NK3, NK4, NK5, NK6) receives from the number of terminals (EG) a location information which comprises a first and second position variable relating to a specific point, the first position variable comprising a semantic description relating to that specific point and the second position variable comprising physical location information relating to that specific point (Pol1, Po2, Pol3, Pol4), wherein
- the network node (NK1, NK2, NK3, NK4, NK5, NK6) evaluates the location information received from the number of terminals and for every first position variable determines an associated third position variable from the second position variable, the third position variable comprising physical location information about the specific point (Pol1, Pol2, Pol3, Pol4) **characterised by** the first position variable, and
- a large number of second position variables are used and evaluated for determining the third position variable.

9. A method according to claim 8 wherein the network node (NK1, NK2, NK3, NK4, NK5, NK6) stores the first position variable and the third position variable for every specific point (Pol1, Pol2, Pol3, Pol4) as location information.

10. A method according to claim 8 or 9 wherein the third position variable is made available to the network nodes (NK1, NK2, NK3, NK4, NK5, NK6) of the communication network (NW) and/or to the terminals (EG) for further processing.

11. A communication system (KS) having a communication network (NW) which exhibits a plurality of network nodes (NK1, NK2, NK3, NK4, NK5, NK6) which are configured to exchange data with a number of terminals of the communication system (KS), wherein said system exhibits means for carrying out the method according to any one of claims 1 to 5.

12. A communication system (KS) according to claim 11 wherein said system is an enterprise network.

## Revendications

1. Procédé servant à faire fonctionner de manière assistée par ordinateur un système de communication (KS) avec un réseau de communication (NW), qui présente une pluralité de noeuds de réseau (NK1, NK2, NK3, NK4, NK5, NK6) qui sont réalisés pour échanger des données avec un certain nombre de terminaux (EG) du système de communication (KS), dans le cadre duquel :
- les terminaux (EG) permettent de déterminer une première variable de localisation en ou au niveau d'un point défini (Pol1, Pol2, Pol3, Pol4), sachant que la première variable de localisation comporte une description sémantique par rapport à ce point défini,
- les terminaux (EG) permettent de déterminer une seconde variable de localisation en ou au niveau du point défini (Pol1, Pol2, Pol3, Pol4), sachant que la deuxième variable de localisation comporte des informations physiques de localisation par rapport à ce point défini, et
- la première variable de localisation et la deuxième variable de localisation qui sont déterminées par l'un des terminaux, constituent conjointement une information de localisation qui est transmise pour un traitement ultérieur à un noeud de réseau (NK1, NK2, NK3, NK4, NK5, NK6) du réseau de communication (NW),
**caractérisé en ce**
- **que** le noeud de réseau (NK1, NK2, NK3, NK4, NK5, NK6) évalue les informations de localisation reçues par le nombre de terminaux et définit dans ce cadre pour chaque première variable de localisation une troisième variable de localisation associée à partir des deuxièmes variables de localisation, sachant que la troisième variable de localisation comporte des informations de localisation physiques par rapport au point défini **caractérisé par** la première variable de localisation, et
- en ce que pour déterminer les troisièmes variables de localisation, on utilise et on évalue une pluralité de deuxièmes variables de localisation.

2. Procédé selon la revendication 1,
**caractérisé en ce que** l'on mémorise la première variable de localisation et la troisième variable de localisation par le noeud de réseau (NK1, NK2, NK3, NK4, NK5, NK6) pour chaque point défini (Pol1, Pol2, Pol3, Pol4) comme information de localisation.

3. Procédé selon l'une quelconque des revendications précédentes,
**caractérisé en ce que** la troisième variable de localisation est mise à la disposition des noeuds de réseau (NK1, NK2, NK3, NK4, NK5, NK6) du réseau de communication (NW) et/ou des terminaux (EG) pour traitement ultérieur.

4. Procédé selon l'une quelconque des revendications précédentes,
**caractérisé en ce que** la détermination de la première variable de localisation est exécutée par la surveillance d'une activation d'un moyen de saisie du terminal (EG).

5. Procédé selon l'une quelconque des revendications précédentes,
**caractérisé en ce que** la détermination des deuxièmes variables de localisation en ou au niveau du point défini (Pol1, Pol2, Pol3, Pol4) est exécutée par un ou plusieurs des procédés suivants par le terminal (EG) :
- un procédé de triangulation,
- la détermination des conditions du champ hertzien (FS1, ..., FS11), du fait que les puissances de champ au moins de quelques noeuds de réseau parmi les noeuds de réseau (NK1, NK2, NK3, NK4, NK5, NK6) du réseau de communication (NW) communiquant sans fil sont déterminées.

6. Utilisation d'un nombre de terminaux dans un système de communication (KS) avec un réseau de communication (NW), qui présente une pluralité de noeuds de réseau (NK1, NK2, NK3, NK4, NK5, NK6) qui sont réalisés pour échanger des données avec le nombre de terminaux (EG), sachant que le système de communication (KS) fonctionne selon le procédé selon l'une quelconque des revendications 1 ou 5, sachant que lors de l'utilisation :
- les terminaux (EG) permettent de déterminer une première variable de localisation en ou au niveau d'un point défini (Pol1, Pol2, Pol3, Pol4), sachant que la première variable de localisation comporte une description sémantique par rapport au point défini,
- les terminaux (EG) permettent de déterminer une deuxième variable de localisation en ou au niveau du point défini (Pol1, Pol2, Pol3, Pol4), sachant que la deuxième variable de localisation comporte des informations physiques de localisation par rapport au point défini, et
- la première variable de localisation et la deuxième variable de localisation, qui sont déterminées par l'un des terminaux, constituent conjointement une information de localisation, qui est transmise à un noeud de réseau du réseau de communication,
- le noeud de réseau (NK1, NK2, NK3, NK4, NK5, NK6) évalue les informations de localisation reçues par le nombre de terminaux et définit dans ce cadre pour chaque première variable de localisation une troisième variable de localisation attribuée à partir des deuxièmes variables de localisation, sachant que la troisième variable de localisation comporte des informations physiques de localisation par rapport au point défini **caractérisé par** la première variable de localisation, et
- pour déterminer les troisièmes variables de localisation on tire et on évalue une pluralité de deuxièmes variables de localisation.

7. Utilisation d'un nombre de terminaux selon la revendication 6, **caractérisée en ce que** le terminal (EG) reçoit une troisième variable de localisation qui est associée au point défini (Pol1, Pol2, Pol3, Pol4) et échange par la troisième variable de localisation la deuxième variable de localisation obtenue dans l'information de localisation, sachant que la troisième information de localisation comporte des informations physiques de localisation par rapport au point défini (Pol1, Pol2, Pol3, Pol4) caractérisant la première variable de localisation et est déterminée par le système de communication (KS).

8. Procédé servant à faire fonctionner de manière assistée par ordinateur un noeud de réseau dans un réseau de communication (NW) qui présente une pluralité de noeuds de réseau (NK1, NK2, NK3, NK4, NK5, NK6) qui sont réalisés pour échanger des données avec un nombre de terminaux (EG) d'un système de communication (KS), dans le cadre duquel :
- une information de localisation, qui comporte une première variable de localisation et une deuxième variable de localisation par rapport à un point défini, est reçue par le nombre de terminaux (EG) grâce au noeud de réseau (NK1, NK2, NK3, NK4, NK5, NK6), sachant que la première variable de localisation comporte une description sémantique par rapport au point défini, et sachant que la deuxième variable de localisation comporte des informations physiques de localisation par rapport au point défini (Pol1, Pol2, Pol3, Pol4),
**caractérisé en ce**
- **que** le noeud de réseau (NK1, NK2, NK3, NK4, NK5, NK6) évalue les informations de localisation reçues par le nombre de terminaux (EG) et définit dans ce cadre pour chaque première variable de localisation une troisième variable de localisation associée à partir des deuxièmes variables de localisation, sachant que la troisième variable de localisation comporte des informations physiques de localisation par rapport au point défini (Pol1, Pol2, Pol3, Pol4) **caractérisé par** la première variable de localisation, et
- en ce que pour déterminer les troisièmes variables de localisation, on utilise et on évalue une pluralité de deuxièmes variables de localisation.

9. Procédé selon la revendication 8,
**caractérisé en ce que** la première variable de localisation et la troisième variable de localisation sont mémorisées par le noeud de réseau (NK1, NK2, NK3, NK4, NK5, NK6) pour chaque point défini (Pol1, Pol2, Pol3, Pol4) comme information de localisation.

10. Procédé selon la revendication 8 ou 9,
**caractérisé en ce que** la troisième variable de localisation est mise à la disposition des noeuds de réseau (NK1, NK2, NK3, NK4, NK5, NK6) du réseau de communication (NW) et/ou des terminaux (EG) pour traitement ultérieur.

11. Système de communication (KS) doté d'un réseau de communication (NW), qui présente une pluralité de noeuds de réseau (NK1, NK2, NK3, NK4, NK5, NK6), lesquels sont réalisés pour échanger des données avec un nombre de terminaux du système de communication (KS),
**caractérisé en ce que**
ce système de communication présente des moyens de mise en oeuvre du procédé selon l'une quelconque des revendications 1 à 5.

12. Système de communication (KS) selon la revendication 11,
**caractérisé en ce que** ce système de communication est un réseau d'entreprise.
